# FASCICULE DE BREVET EUROPEEN

(11) **EP 3 670 964 B1**
(45) Date de publication et mention de la délivrance du brevet: **08.09.2021**
(21) Numéro de dépôt: 19217724.4
(22) Date de dépôt: 18.12.2019
(51) Int. Cl.: F16H 49/00, B64C 25/24, B64C 25/20

(54) **PROCEDE DE PROTECTION CONTRE LES CHOCS POUVANT AFFECTER UN ATTERRISSEUR D'AERONEF, ET ATTERRISSEUR D'AERONEF**
SCHUTZVERFAHREN GEGEN STÖSSE, DIE DAS FAHRWERK EINES LUFTFAHRZEUGS BEEINTRÄCHTIGEN KÖNNEN, UND FAHRWERK EINES LUFTFAHRZEUGS
METHOD FOR PROTECTING AGAINST IMPACTS THAT COULD AFFECT AN AIRCRAFT LANDING GEAR, AND AIRCRAFT LANDING GEAR

(30) Priorité: 18.12.2018 FR 1873262
(43) Date de publication de la demande: 24.06.2020
(73) Titulaire: Safran Landing Systems, 78140 Vélizy-Villacoublay (FR)
(72) Inventeur: FORTIER, Florent, 77550 Moissy-Cramayel (FR); DUBOIS, Sébastien, 77550 Moissy-Cramayel (FR); DAUPHIN, Florent, 77550 Moissy-Cramayel (FR)
(74) Mandataire: Lavialle, Bruno François Stéphane

(56) Documents cités:
- FR-A1- 2 946 319
- GB-A- 612 462
- GB-A- 779 420
- GB-A- 2 489 503
- US-A- 2 148 972
- US-A- 2 476 376

## Description

### ARRIERE PLAN DE L'INVENTION

On connaît des atterrisseurs mobiles entre une position rétractée et une position déployée et équipés d'un actionneur électromécanique de manœuvre de type rotatif, comme par exemple illustré dans le document FR2946319.

Dans certaines circonstances, par exemple lors d'une défaillance d'alimentation électrique, l'atterrisseur est libéré de sa position rétractée et est laissé libre de se déplacer vers la position déployée sous l'effet de la gravité et du vent relatif. Lors d'un tel déploiement, l'actionneur électromécanique de manœuvre ne régule pas la vitesse de déplacement de l'atterrisseur et ce dernier peut arriver avec une vitesse importante en position déployée, occasionnant un arrêt brutal de l'atterrisseur. D'autres chocs peuvent survenir, notamment au moment du contact de l'atterrisseur avec le sol lors d'un atterrissage. Ces chocs sont susceptibles de faire remonter vers l'actionneur de manœuvre des sollicitations brutales qui peuvent l'endommager.

### OBJET DE L'INVENTION

L'invention vise à proposer un procédé de protection contre affectant un atterrisseur d'aéronef, permettant de protéger son actionneur électromécanique de manœuvre contre les risques d'endommagement.

### RESUME DE L'INVENTION

En vue de la réalisation de ce but, on propose un procédé de protection contre les chocs de fin affectant un atterrisseur d'aéronef, l'atterrisseur étant manœuvrable entre une position rétractée et une position déployée au moyen d'un unique actionneur électromécanique de manœuvre. Selon l'invention, le procédé comporte l'étape d'équiper l'actionneur électromécanique de manœuvre d'un dispositif amortisseur interne disposé entre un arbre de sortie de l'actionneur électromécanique attelé à l'atterrisseur et un arbre moteur d'un moteur de l'actionneur électromécanique.

Ainsi, l'actionneur électromécanique est protégé des chocs affectant l'atterrisseur et remontant à l'actionneur, en particulier en cas d'arrêt brutal à l'arrivée dans la position déployée.

### BREVE DESCRIPTION DES DESSINS

L'invention sera mieux comprise à la lumière de la description qui suit de mode de mise en œuvre du procédé de l'invention en référence aux figures des dessins annexés parmi lesquelles :
- La figure 1 est une vue de côté d'un atterrisseur faisant application des dispositions de l'invention, illustré ici en position déployée ;
- La figure 2 est une vue de côté squelettique de l'atterrisseur de la figure 1 en position déployée ;
- La figure 3 est une vue de côté squelettique de l'atterrisseur de la figure 1 dans une position intermédiaire entre la position déployée et la position rétractée ;
- La figure 4 est une vue de côté squelettique de l'atterrisseur de la figure 1 en position rétractée ;
- La figure 5 est une vue schématique de l'intérieur de l'actionneur électromécanique de manœuvre associé à l'atterrisseur de la figure 1, selon une première variante de réalisation ;
- La figure 6 est une vue schématique de l'intérieur de l'actionneur électromécanique de manœuvre associé à l'atterrisseur de la figure 1, selon une deuxième variante de réalisation ;
- La figure 7 est une vue schématique de l'intérieur de l'actionneur électromécanique de manœuvre associé à l'atterrisseur de la figure 1, selon une troisième variante de réalisation.

### DESCRIPTION DETAILLEE DE L'INVENTION

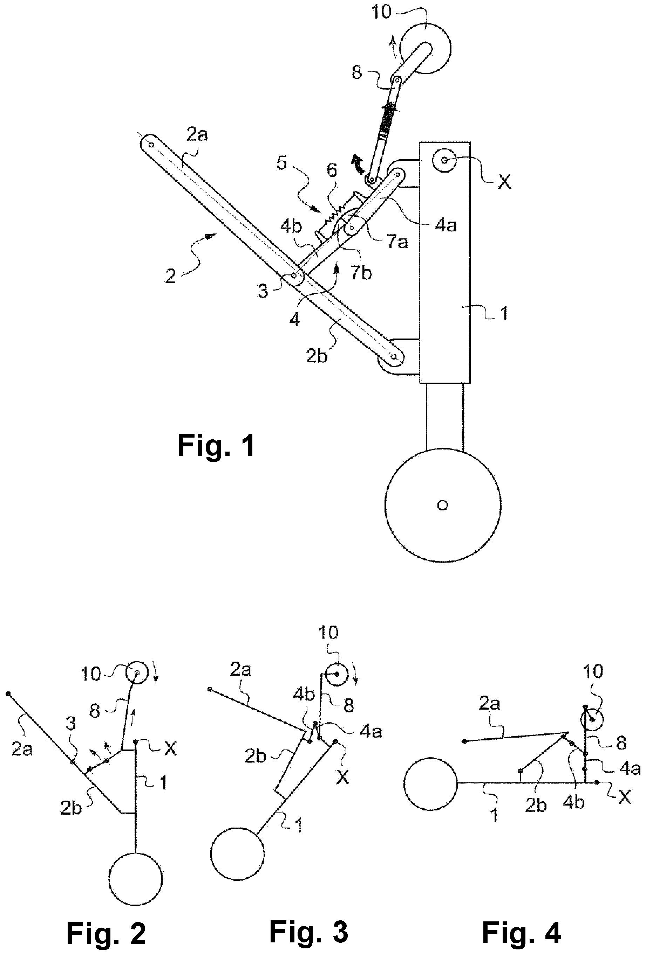

En référence tout d'abord à la figure 1, l'atterrisseur comporte de façon connue en soi une jambe 1 articulée à la structure de l'aéronef selon un axe d'articulation X (vu ici en bout) pour être mobile entre une position déployée illustrée ici dans laquelle l'atterrisseur est amené préalablement à un atterrissage, et une position rétractée qui est celle de l'atterrisseur en vol.

Une contrefiche briseuse 2 est articulée d'une part sur la jambe 1 et d'autre part sur la structure de l'aéronef. La contrefiche 2 briseuse comprend deux bielles 2a, 2b, articulées entre elles au niveau d'un genou 3. La bielle 2a est par ailleurs articulée sur l'aéronef, tandis que la bielle 2b est articulée sur la jambe 1. La contrefiche briseuse 2 est stabilisée en position sensiblement alignée au moyen d'un organe de stabilisation 4 comportant deux biellettes 4a, 4b, également articulées entre elles. La biellette 4a est articulée sur la jambe 1, et la biellette 4b est articulée sur la contrefiche 2. Les biellettes 4a, 4b sont maintenues en position sensiblement alignée par un organe de verrouillage 5 comportant des ressorts de rappel 6 rappelant les biellettes 4a, 4b vers la position de verrouillage définie par des butées 7a, 7b.

Ainsi stabilisée, la contrefiche briseuse 2 s'oppose à toute rotation de la jambe 1 autour de son axe d'articulation X, de sorte que la position déployée est une position stable. Comme cela est bien connu, les bielles 2a, 2b et les biellettes 4a, 4b sont conçues de sorte que pour arriver à la position verrouillée illustrée ici, le genou d'articulation des bielles et le genou d'articulation des biellettes passent légèrement au-delà de l'alignement géométrique illustré par les traits interrompus.

Un actionneur électromécanique de manœuvre 10 est disposé sur la structure de l'aéronef pour être attelé à la biellette 4a de l'organe de stabilisation 4, celle qui est ici articulée sur la jambe 1. Ici, l'actionneur électromécanique de manœuvre 10 est du type rotatif et comporte une manivelle 11 qui est attelée à la biellette 4a au moyen d'une tringle 8. Le fonctionnement de l'ensemble est maintenant expliqué en référence aux figures 2 à 4. Lorsque l'atterrisseur doit être remonté en position rétractée, l'actionneur électromécanique de manœuvre 10 est sollicité. Il exerce une traction sur la biellette 4a (voir flèche), ce qui a pour effet de faire pivoter celle-ci autour de son axe de rotation sur la jambe, et ainsi briser l'alignement des biellettes 4a, 4b à l'encontre de l'action des ressorts de rappel 6 de l'organe de verrouillage 5.

Comme la biellette 4b est attelée à la contrefiche 2, l'alignement des bielles 2a, 2b est également brisé. L'atterrisseur est ainsi déverrouillé et peut être pivoté autour de son axe d'articulation sous l'action de l'actionneur électromécanique de manœuvre 10, comme cela est illustré à la figure 3. Alors que l'actionneur électromécanique de manœuvre 10 continue à faire pivoter la biellette 4a, celle-ci entraîne successivement l'autre biellette 4b, les bielles 2a, 2b de la contrefiche 2, et, pour finir, la jambe 1 de l'atterrisseur. Tous ces éléments sont liés entre eux de sorte qu'à une position angulaire de la biellette 4a correspond une et une seule position de chacun de ces éléments.

Le mouvement se poursuit jusqu'à la position illustrée à la figure 4, dans laquelle la jambe 1 est arrivée en position rétractée. Il importe de faire en sorte que lors du mouvement de l'atterrisseur de sa position déployée à sa position rétractée, la biellette 4a se déplace selon un mouvement continu et sans singularité, de sorte que le mouvement de la jambe peut être assurée au moyen d'une action continue et toujours dans le même sens de l'actionneur électromécanique de manœuvre 10 sur la biellette 4a. Ainsi, avec un seul actionneur électromécanique, on assure le désalignement de l'organe de stabilisation, ce qui provoque le désalignement de la contrefiche, et, partant, le déplacement de la jambe. Pour la descente de l'atterrisseur en position déployée, elle pourra être effectuée sous l'effet de la gravité, l'actionneur électromécanique de manœuvre 10 étant contrôlé pour réguler la vitesse de descente de l'atterrisseur. En effet, le mouvement de la biellette 4a, qui est continu et sans singularité dans le sens du relevage, est donc continu et sans singularité dans le sens de la descente, de sorte que l'actionneur électromécanique de manœuvre 10 est entraîné toujours dans le même sens lors de la descente de l'atterrisseur et fonctionne donc en générateur, et peut donc être utilisé comme frein lors de la descente. Pour ce faire, il convient bien sûr que l'actionneur électromécanique de manœuvre 10 soit réversible et puisse être entraîné par la biellette 4a lors de la descente de l'atterrisseur.

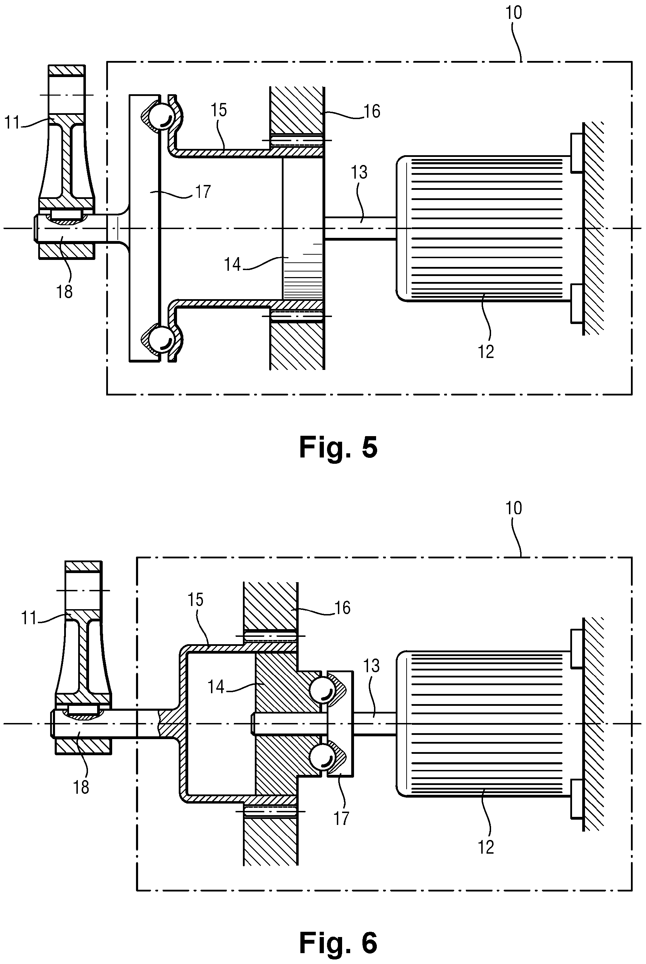

Comme visible à la figure 5, l'actionneur électromécanique de manœuvre 10 est ici un motoréducteur du type à onde de déformation, encore connu sous le nom de « harmonic drive ». Ce type d'actionneur électromécanique peut présenter un rapport de réduction important tout en restant réversible. A contrario, quand l'actionneur électromécanique de manœuvre 10 est entraîné lors de la descente de l'atterrisseur, ce rapport de réduction devient un rapport de multiplication, de sorte que le rotor du moteur de l'actionneur électromécanique est entraîné à grande vitesse.

Dans certaines circonstances particulières, il se peut que l'actionneur électromécanique de manœuvre 10 ne freine pas la descente de l'atterrisseur vers la position déployée, par exemple en cas de défaillance électrique. L'atterrisseur peut arriver vers la position déployée avec une vitesse importante, et l'arrêt dans cette position peut être brutal. Compte tenu du grand rapport de réduction, l'inertie du rotor du moteur est importante. Et son arrêt brutal peut engendrer des efforts importants, susceptibles d'endommager l'actionneur électromécanique 10. Selon l'invention, on insert un amortisseur dans l'actionneur électromécanique pour diminuer les risques d'endommagement de celui-ci suite à une arrivée rapide de l'atterrisseur en position déployée.

Plus précisément, l'actionneur électromécanique 10 tel qu'illustré à la figure 5 comporte un moteur 12 entraînant un arbre moteur 13 entraînant un générateur d'ondes 14. Celui-ci coopère avec une cloche déformable 15 possédant des dents à sa périphérie qui sont astreintes par le générateur d'ondes 14 à coopérer en deux lieux diamétralement opposés avec des dents d'une couronne 16 portée par le carter de l'actionneur électromécanique. La cloche déformable 15 possède un nombre de dents légèrement inférieur au nombre de dents de la couronne 16, ce qui a pour effet de faire tourner la cloche déformable 15 en sens inverse de celui du générateur d'ondes 14, à une vitesse angulaire beaucoup plus faible. La manivelle 11 est portée par un arbre de sortie 18 qui est solidarisé à la cloche déformable 15 via un dispositif amortisseur 17 (par exemple du type à plateaux glissants, à billes, ou tout autre type de dispositif amortisseur). Ce dispositif amortisseur 17 permet de filtrer toute vibration lors du fonctionnement normal de l'actionneur électromécanique, et permet de diminuer considérablement les conséquences d'un arrêt brutal de l'atterrisseur en position déployée, en protégeant le moteur 12, et notamment son rotor.

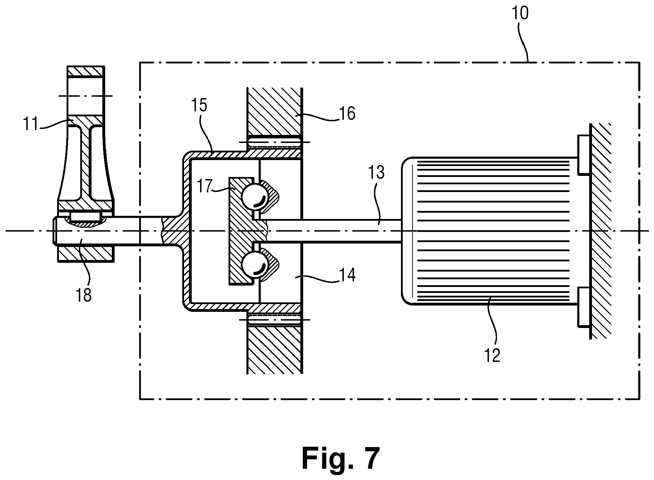

Selon une variante de réalisation illustrée à la figure 6, le dispositif amortisseur 17 est maintenant placé entre l'arbre moteur 13 du moteur 12 et le générateur d'ondes 14. La cloche déformable 15 est ici directement solidarisée à l'arbre de sortie 18 qui porte la manivelle 11. Selon encore une autre variante de réalisation illustrée à la figure 7, le dispositif amortisseur 17 est encore placé entre l'arbre moteur 13 du moteur 12 et le générateur d'ondes 14, mais cette fois-ci en s'étendant à l'intérieur de la cloche déformable 15.

Ainsi, grâce à la disposition d'un dispositif amortisseur interne à l'actionneur électromécanique à onde de déformation, on bénéficie des avantages de ce type d'actionneur électromécanique tout en le protégeant des éventuels arrêts brutaux dus à la chute rapide de l'atterrisseur vers la position déployée.

L'invention n'est pas limitée à ce qui vient d'être décrit, mais englobe au contraire toute variante entrant dans le cadre défini par les revendications.

En particulier, l'invention n'est pas limitée à la manœuvre d'un atterrisseur à contrefiche briseuse et organe de verrouillage à alignement. Elle s'applique à la manœuvre d'un atterrisseur agencé pour être manœuvré au moyen d'un unique actionneur électromécanique capable d'assurer à lui seul la manœuvre de l'atterrisseur entre la position déployée et la position rétractée.

## Revendications

1. Procédé de protection contre les chocs de fin de course affectant un atterrisseur d'aéronef, l'atterrisseur étant manœuvrable entre une position rétractée et une position déployée au moyen d'un unique actionneur électromécanique de manœuvre (10) du type à onde de déformations, **caractérisé en ce que** le procédé comporte l'étape d'équiper l'actionneur électromécanique de manœuvre d'un dispositif amortisseur (17) interne disposé entre un arbre de sortie (18) de l'actionneur électromécanique attelé à l'atterrisseur et un arbre moteur (13) d'un moteur (12) de l'actionneur électromécanique.

2. Procédé selon la revendication 1, dans lequel le dispositif amortisseur (17) est inséré entre une cloche déformable (15) et l'arbre de sortie (18) de l'actionneur électromécanique.

3. Procédé selon la revendication 1, dans lequel le dispositif amortisseur (17) est inséré entre l'arbre moteur (13) et un générateur d'ondes (14) de l'actionneur électromécanique.

4. Procédé selon la revendication 3, dans lequel le dispositif amortisseur (17) est disposé à l'intérieur d'une cloche déformable (15) de l'actionneur électromécanique.

5. Atterrisseur d'aéronef manœuvrable entre une position rétractée et une position déployée, comportant un unique actionneur électromécanique de manœuvre pour déplacer l'atterrisseur entre les deux positions, l'actionneur électromécanique étant du type à onde de déformations, **caractérisé en ce qu'**il comporte un dispositif amortisseur (17) interne disposé entre un arbre de sortie (18) de l'actionneur électromécanique attelé à l'atterrisseur et un arbre moteur (13) d'un moteur (12) de l'actionneur électromécanique.

## Patentansprüche

1. Schutzverfahren gegen Stöße in der Endstellung, die ein Fahrwerk eines Luftfahrzeugs beeinträchtigen, wobei das Fahrwerk zwischen einer eingefahrenen Position und einer ausgefahrenen Position mittels eines einzigen elektromechanischen Stellaktors (10) vom Typ mit Verformungswelle bewegbar ist, **dadurch gekennzeichnet, dass** das Verfahren den Schritt des Ausrüstens des elektromechanischen Stellaktors mit einer internen Stoßdämpfervorrichtung (17) umfasst, die zwischen einer Abtriebswelle (18) des elektromechanischen Aktors, die an das Fahrwerk gekoppelt ist, und einer Motorwelle (13) eines Motors (12) des elektromechanischen Aktors angeordnet ist.

2. Verfahren nach Anspruch 1, bei dem die Stoßdämpfervorrichtung (17) zwischen einer verformbaren Glocke (15) und der Abtriebswelle (18) des elektromechanischen Aktors eingefügt wird.

3. Verfahren nach Anspruch 1, bei dem die Stoßdämpfervorrichtung (17) zwischen der Motorwelle (13) und einem Wellenerzeuger (14) des elektromechanischen Aktors eingefügt wird.

4. Verfahren nach Anspruch 3, bei dem die Stoßdämpfervorrichtung (17) im Inneren einer verformbaren Glocke (15) des elektromechanischen Aktors angeordnet wird.

5. Luftfahrzeugfahrwerk, das zwischen einer eingefahrenen Position und einer ausgefahrenen Position bewegbar ist, umfassend einen einzigen elektromechanischen Stellaktor, um das Fahrwerk zwischen den beiden Positionen zu bewegen, wobei der elektromechanische Aktor vom Typ mit Verformungswelle ist, **dadurch gekennzeichnet, dass** er eine interne Stoßdämpfervorrichtung (17) umfasst, die zwischen einer Abtriebswelle (18) des elektromechanischen Aktors, die an das Fahrwerk gekoppelt ist, und einer Motorwelle (13) eines Motors (12) des elektromechanischen Aktors angeordnet ist.

## Claims

1. Method for protecting against end-of-travel impacts affecting an aircraft landing gear, the landing gear being movable between a retracted position and a deployed position by means of a single electromechanical actuator (10) of the strain-wave type, **characterised in that** the method comprises the step of equipping the electromechanical actuator with an internal shock-absorbing device (17) arranged between an output shaft (18) of the electromechanical actuator that is coupled to the landing gear and a motor shaft (13) of a motor (12) of the electromechanical actuator.

2. Method according to claim 1, wherein the shock-absorbing device (17) is inserted between a deformable cup (15) and the output shaft (18) of the electromechanical actuator.

3. Method according to claim 1, wherein the shock-absorbing device (17) is inserted between the motor shaft (13) and a wave generator (14) of the electromechanical actuator.

4. Method according to claim 3, wherein the shock-absorbing device (17) is arranged inside a deformable cup (15) of the electromechanical actuator.

5. Aircraft landing gear that can be moved between a retracted position and a deployed position, comprising a single electromechanical actuator for moving the landing gear between said two positions, the electromechanical actuator being of the strain-wave type, **characterised in that** it comprises an internal shock-absorbing device (17) arranged between an output shaft (18) of the electromechanical actuator that is coupled to the landing gear and a motor shaft (13) of a motor (12) of the electromechanical actuator.
